(19) **Europäisches Patentamt**
**European Patent Office**
**Office européen des brevets**

(11) **EP 4 693 423 A1**

(12) **EUROPEAN PATENT APPLICATION**
published in accordance with Art. 153(4) EPC

(43) Date of publication:
**11.02.2026 Bulletin 2026/07**

(21) Application number: **24831433.8**

(22) Date of filing: **13.05.2024**

(51) International Patent Classification (IPC):
$H01M\ 4/02$ *(2006.01)*     $C22C\ 18/00$ *(2006.01)*
$C25D\ 1/00$ *(2006.01)*     $C25D\ 1/04$ *(2006.01)*
$C25D\ 7/06$ *(2006.01)*     $H01M\ 4/66$ *(2006.01)*

(52) Cooperative Patent Classification (CPC):
Y02E 60/10

(86) International application number:
**PCT/JP2024/017609**

(87) International publication number:
**WO 2025/004560 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108794**

(71) Applicant: **Mitsui Kinzoku Company, Limited Tokyo (JP)**

(72) Inventors:
• **MAGORI, Daisuke**
**Takehara-shi, Hiroshima 725-0025 (JP)**
• **KURUMA, Takuya**
**Takehara-shi, Hiroshima 725-0025 (JP)**

• **INOUE, Hidetoshi**
**Takehara-shi, Hiroshima 725-0025 (JP)**
• **MATSUFUJI, Masatsugu**
**Takehara-shi, Hiroshima 725-0025 (JP)**
• **MIYASAKO, Yuma**
**Takehara-shi, Hiroshima 725-0025 (JP)**

(74) Representative: **Novagraaf Technologies**
**Bâtiment O2**
**2, rue Sarah Bernhardt**
**CS90017**
**92665 Asnières-sur-Seine Cedex (FR)**

Remarks:
The applicant has filed a text with which it is intended to bring the translation into conformity with the application as filed (Art. 14(2) EPC).

(54) **METAL FOIL**

(57) A metal foil includes a core portion that has a first side and a second side located opposite to the first side and is made of a metal material, and a cladding portion that is located on at least one side of the core portion and contains zinc as a base material, wherein, when each of the two sides of the metal foil is individually subjected to X-ray diffraction measurement, the intensity ratio of the peak intensity $S_{(002)}$ of a peak derived from the (002) plane of zinc to the peak intensity $S_{(101)}$ of a peak derived from the (101) plane of zinc is 1.01 or more on each side.

Fig.4

Example 4  Other side : $S_{(002)}\diagup S_{(101)}$ =10.87

One side : $S_{(002)}\diagup S_{(101)}$ =6.06

Example 3  Other side : $S_{(002)}\diagup S_{(101)}$ =13.20

One side : $S_{(002)}\diagup S_{(101)}$ =9.60

Example 2  Other side : $S_{(002)}\diagup S_{(101)}$ =19.73

One side : $S_{(002)}\diagup S_{(101)}$ =136.03

Example 1  Other side : $S_{(002)}\diagup S_{(101)}$ =1.02

One side : $S_{(002)}\diagup S_{(101)}$ =1.62

**EP 4 693 423 A1**

## Description

### Technical Field

The present invention relates to a metal foil having a core portion made of a metal material and a cladding portion containing zinc as a base material.

### Background Art

Conventionally, metal foils containing zinc have been used as negative electrode active materials or the like for batteries. For example, the applicant of the present invention has previously proposed a zinc foil containing bismuth, with the remainder consisting of zinc and unavoidable impurities, wherein the zinc foil has an average zinc crystal grain size of 0.2 μm or more and 8 μm or less, as well as a primary battery negative electrode active material using the zinc foil (see Patent Literature 1). This zinc foil has the advantage that when the zinc foil is used as a negative electrode active material in a battery, the amount of gas generated during long-term storage of the battery is suppressed, compared with when a conventional rolled zinc foil is used.

In recent years, secondary batteries using zinc as a negative electrode active material, such as air-zinc secondary batteries and manganese-zinc secondary batteries, have garnered attention. These secondary batteries are expected to be used in mobile devices and drones as next-generation high-capacity storage batteries, taking advantage of the economic efficiency and safety of zinc.

### Citation List

Patent Literature

Patent Literature 1: US 2022/0037654A1

### Summary of Invention

When a zinc foil is used as a negative electrode active material in a secondary battery, shape stability during long-term storage is required.

However, when the inventors of the present invention examined conventional zinc foils, it was found that there were cases where they warped or stretched, for example, during long-term storage, indicating that there is room for improvement in shape stability.

An object of the present invention is to provide a technology that can overcome the problem with the conventional technologies described above.

As a result of in-depth research, the inventors of the present invention found that it is possible to address the above-described problem by providing a metal foil in which a core portion made of a metal material is combined with a cladding portion containing zinc as a base material, and that has a specific crystal orientation of zinc on both sides.

The present invention was achieved based on this finding and provides a metal foil comprising:

a core portion that has a first side and a second side located opposite to the first side and is made of a metal material; and

at least one cladding portion that is located on at least one of the first side and the second side of the core portion and contains zinc as a base material,

wherein, when a first side and a second side of the metal foil is individually subjected to X-ray diffraction measurement, an intensity ratio of a peak intensity $S_{(002)}$ of a peak derived from the (002) plane of zinc to a peak intensity $S_{(101)}$ of a peak derived from the (101) plane of zinc is 1.01 or more on the first side and the second side of the metal foil.

### Brief Description of Drawings

[Fig. 1] Fig. 1 is a captured image of software that is used to determine a zinc crystal grain size.

[Fig. 2] Fig. 2 is a schematic diagram showing an inter-electrode area that is used to calculate a circulation rate of an electrolyte solution.

[Fig. 3] Fig. 3 shows schematic views illustrating the dimensions of a metal foil. Fig. 3(1) is a perspective view of the metal foil, and Fig. 3(2) is a side view of the metal foil.

[Fig. 4] Fig. 4 shows results of X-ray diffraction measurements performed on metal foils of Examples 1 to 4.

[Fig. 5] Fig. 5 shows results of X-ray diffraction measurements performed on metal foils of Comparative Examples 1 to 3.

**Description of Embodiments**

Hereinafter, a preferred embodiment of the present invention will be described.

A metal foil of the present embodiment includes a core portion and a cladding portion located on at least one side of the core portion. In the present embodiment, the metal foil is obtained through electrolytic zinc plating. The core portion corresponds to a substrate that is placed as a cathode in an electrolyte solution containing zinc ions during electrolytic plating using the electrolyte solution, and the cladding portion corresponds to an electrolytic layer containing zinc deposited on the substrate as a base material. The core portion and the cladding portion will be individually described below.

In the present embodiment, the core portion has a first side and a second side located opposite to the first side. Preferably, the first side and the second side are parallel to each other. As with the metal foil, the core portion of the present embodiment is the form of a foil. This foil has a thickness direction that is perpendicular to the first side and the second side. Thus, an example of the shape of the core portion of the present embodiment, which has the first side and the second side located opposite to the first side, is a thin, spreading, and flat shape. The shape of the core portion may be described as film-like, sheet-like, or lamellar. The center position of the metal foil of the present embodiment with respect to the thickness direction may be located in the core portion or in the cladding portion.

The core portion is made of a metal material. The metal material contains a metal as its base material. In terms of dimensional and shape stability during long-term storage of the core portion as the substrate, as well as ease of availability and the like, the base material metal constituting the core portion may be copper, zinc, aluminum, or the like. For ease of forming the cladding portion, adhesion with the cladding portion, and prevention of passivation, at least one selected from copper and zinc is particularly preferable. Therefore, it is especially preferable that the core portion is at least one selected from a copper foil and a zinc foil.

The phrase "containing a metal as a base material" means that the content of the metal is 80 mass% or more. The content of the metal in the core portion may be 90 mass% or more, 95 mass% or more, 99 mass% or more, or 99.5 mass% or more. In particular, when the metal is at least one selected from copper and zinc, the content of the metal is preferably higher than or equal to the aforementioned lower limit. Accordingly, when the base material metal constituting the core portion is copper, the copper content in the core portion may be 90 mass% or more, 95 mass% or more, 99 mass% or more, or 99.5 mass% or more. When the base material metal constituting the core portion is zinc, the content of zinc constituting the core portion may be 90 mass% or more, 95 mass% or more, 99 mass% or more, or 99.5 mass% or more.

In the metal foil of the present embodiment, both sides of the metal foil exhibit a predetermined peak intensity ratio derived from zinc when subjected to X-ray diffraction measurement. In other words, zinc is present on the surface of both sides of the metal foil. Therefore, when the base material of the core portion of the metal foil is a metal other than zinc, cladding portion(s) containing zinc as a base material are formed on both sides of the core portion. On the other hand, when the base material of the core portion of the metal foil is zinc, zinc is present on the surface of the core portion itself. Therefore, when the surface of one side of the core portion satisfies the aforementioned peak intensity ratio, a cladding portion may be formed on the surface of only one side of the core portion, or cladding portion(s) may be formed on the surface of both sides of the core portion.

A metal foil in which the core portion is a copper foil is preferable not only because it maintains shape stability after long-term storage but also because it can reduce production costs. The copper foil may be either an electrolytic copper foil or a rolled copper foil. When the core portion is a copper foil, cladding portion(s) containing zinc as a base material are formed on both sides of the copper foil. Each of the cladding portion(s) formed on both sides of the copper foil both has a peak intensity ratio $S_{(002)}/S_{(101)}$ of 1.01 or more, where $S_{(002)}$ represents the peak intensity of a peak derived from the (002) plane of zinc, and $S_{(101)}$ represents the peak intensity of a peak derived from the (101) plane of zinc. Note that, as used herein, an "electrode surface" of an electrolytic foil refers to the surface on the side that was in contact with a cathode during the production of the electrolytic foil (e.g., electrolytic copper foil). Also, as used herein, a "deposition surface" of the electrolytic foil refers to the surface on the side on which an electrolytic metal (e.g., electrolytic copper) was deposited, or in other words, the surface on the side that was not in contact with the cathode, during the production of the electrolytic foil.

When the core portion is a copper foil, it is preferable that the core portion consists of copper, an additive element, and unavoidable impurities, or copper and unavoidable impurities.

When the core portion is a copper foil, the additive element may be at least one element selected from the group consisting of tin, zinc, aluminum, iron, nickel, manganese, beryllium, tungsten, titanium, boron, cerium, lanthanum, praseodymium, and neodymium.

When the core portion is a copper foil, the unavoidable impurities may be sulfur, phosphorous, and oxygen. The amount of each of the aforementioned unavoidable impurities in the core portion is preferably 100 ppm by mass or less, and more preferably 10 ppm by mass or less. It should be noted that the contents of the various additive elements listed above may also be less than or equal to an upper limit similar to the preferable upper limit of these unavoidable impurities. That is, for each metal selected from the group consisting of tin, zinc, aluminum, iron, nickel, manganese, beryllium, tungsten, titanium, boron, cerium, lanthanum, praseodymium, and neodymium, the amount of the metal in the core portion may be 100 ppm by mass or less, or 10 ppm by mass or less.

The amounts of the various additive elements and unavoidable impurities described in the specification of the present application can be used independently of one another. For example, the amounts of the above-listed fourteen elements, from tin to neodymium, may be used alone or in any combination.

The core portion is preferably a zinc foil because this core portion is particularly suitable for a secondary battery. The zinc foil may be either an electrolytic zinc foil or a rolled zinc foil. When the zinc foil is an electrolytic zinc foil, it is preferable that a cladding portion is formed on at least the electrode surface, of the electrode surface and the deposition surface of the electrolytic zinc foil because this facilitates obtaining a metal foil that exhibits an $S_{(002)}/S_{(101)}$ ratio of 1.01 or more on both sides when each side of the metal foil is individually subjected to X-ray diffraction measurement.

When the zinc foil is a rolled zinc foil, it is preferable that cladding portion(s) are formed on both sides of the metal foil because this facilitates obtaining a metal foil that exhibits an $S_{(002)}/S_{(101)}$ ratio of 1.01 or more on both sides when each side of the metal foil is individually subjected to X-ray diffraction measurement.

When the core portion is a zinc foil, it is preferable that the core portion consists of zinc, an additive element, and unavoidable impurities, or zinc and unavoidable impurities.

When the core portion is a zinc foil, the additive element may be at least one element selected from the group consisting of bismuth, indium, magnesium, calcium, gallium, tin, barium, strontium, silver, and manganese.

When the core portion is a zinc foil, the unavoidable impurities may be iron, copper, lead, cadmium, nickel, chromium, sodium, and potassium. When the core portion is a zinc foil, the amount of each of the above-listed unavoidable impurities in the core portion is preferably 100 ppm or less, and more preferably 10 ppm by mass or less. Note that the contents of the various additive elements listed above may also be less than or equal to an upper limit similar to the preferable upper limit of these unavoidable impurities. That is, for each metal selected from the aforementioned group consisting of bismuth, indium, magnesium, calcium, gallium, tin, barium, strontium, silver, and manganese, the amount of the metal in the core portion may be 100 ppm by mass or less, or 10 ppm by mass or less.

The contents of copper, zinc, and the above-listed additive elements and unavoidable impurities in the core portion are measured by sampling the core portion from the zinc foil and subjecting the sample to ICP optical emission spectroscopy. The sample is dissolved in an acidic solution of nitric acid, hydrochloric acid, or the like. Then, the concentrations of metals contained in the solution other than zinc are measured using ICP optical emission spectroscopy, and converted into the contents by mass of the various metal elements, with the total metal concentration in the solution being set to 1. The method for sampling the core portion is as follows. The position of the core portion is confirmed through observation using a scanning electron microscope, which will be described later. If a cladding portion is located only on one side of the core portion, the surface of the core portion on the core portion side can be scraped off with a cutter, a file, or the like to obtain a sample. On the other hand, if cladding portion(s) are located on both sides of the core portion, a sample consisting of the core portion can be obtained by removing the cladding portion using a cutter, a file, or the like.

From the viewpoint of achieving excellent shape and dimensional stability, the core portion preferably has a thickness Wr of 5 $\mu$m or more, more preferably 10 $\mu$m or more, and even more preferably 15 $\mu$m or more. On the other hand, from the viewpoint of flexibility, the thickness Wr of the core portion is preferably 300 $\mu$m or less, more preferably 200 $\mu$m or less, and even more preferably 150 $\mu$m or less. From these viewpoints, the thickness Wr of the core portion is preferably in the range of 5 $\mu$m or more and 300 $\mu$m or less, more preferably 10 $\mu$m or more and 200 $\mu$m or less, and even more preferably 15 $\mu$m or more and 150 $\mu$m or less.

When the core portion is a copper foil, from the viewpoints of achieving excellent elongation properties of the zinc foil and improving repetitive flexibility, the core portion preferably has an average copper crystal grain size of 5 $\mu$m or more, more preferably 10 $\mu$m or more, and even more preferably 100 $\mu$m or less. In addition, from the viewpoint of making the advantage of reducing the amount of gas generation more marked, the cladding portion preferably has an average zinc crystal grain size of 80 $\mu$m or less, more preferably 60 $\mu$m or less, and even more preferably 40 $\mu$m or less.

When the core portion is a zinc foil, from the viewpoints of achieving excellent elongation properties of the zinc foil and improving repetitive flexibility, the core portion preferably has an average zinc crystal grain size of 24 $\mu$m or more, more preferably 35 $\mu$m or more, and even more preferably 100 $\mu$m or less. In addition, from the viewpoint of making the advantage of reducing the amount of gas generation more marked, the cladding portion preferably has an average zinc crystal grain size of less than 100 $\mu$m, more preferably 50 $\mu$m or less, and even more preferably 10 $\mu$m or less.

It should be noted that the core portion may contain bismuth or may be free of bismuth. The core portion "being substantially free of bismuth" means that the bismuth content in the core portion is 90 ppm by mass or less.

At least one cladding portion is located on at least one side of the core portion. The cladding portion may be formed only on one of the two sides of the core portion, or the cladding portion may be integrally or respectively formed on both sides of the core portion. However, it is preferable that the cladding portion is integrally or respectively formed on both sides of the core portion, because this ensures excellent shape stability during long-term storage. In the present embodiment, a cladding portion is a layer stacked on the core portion. In the present embodiment, a cladding portion is formed in direct contact with the core portion. On a side of the core portion where a cladding portion is located, the cladding portion may fully coat that side of the core portion, or may coat a part of that side of the core portion.

The cladding portion contains zinc as a base material. "Containing zinc as a base material" has the same meaning as defined for the core portion. The zinc content in the cladding portion may be 90 mass% or more, 95 mass% or more, 99 mass% or more, or 99.5 mass% or more.

The cladding portion may contain bismuth or may be free of bismuth. For example, the cladding portion may consist of zinc, bismuth, an additive element other than bismuth, and unavoidable impurities, may consist of zinc, bismuth, and unavoidable impurities, may be consist of zinc, an additive element other than bismuth, and unavoidable impurities, or may be consist of zinc and unavoidable impurities. The cladding portion may or may not be an alloy.

When the cladding portion contains an additive element other than bismuth, it is advantageous to use, as the additive element, an element with a hydrogen overvoltage higher than that of zinc or an oxidation-reduction potential nobler than that of zinc. Such a metal element may be at least one selected from the group consisting of indium, magnesium, calcium, gallium, tin, barium, strontium, silver, and manganese. The amount of the above-described additive element(s), in terms of the ratio of the total of indium, magnesium, calcium, gallium, tin, barium, strontium, silver, and manganese in the cladding portion is preferably 10,000 ppm by mass or less, and more preferably 8,000 ppm by mass or less. Furthermore, when the cladding portion contains an additive element selected from indium, magnesium, calcium, gallium, tin, barium, strontium, silver, and manganese, the total amount of the contained additive element(s) may be preferably 10 ppm by mass or more.

The unavoidable impurities in the cladding portion may be iron, copper, aluminum, lead, cadmium, nickel, chromium, sodium, and potassium. The amount of unavoidable impurities listed above, in terms of the ratio of the total of iron, copper, aluminum, lead, cadmium, nickel, chromium, sodium, and potassium in the cladding portion, is preferably 100 ppm by mass or less, and more preferably 10 ppm by mass or less. There are also cases where the unavoidable impurities include magnesium or calcium. In such cases, the amount of the total of iron, copper, aluminum, lead, cadmium, nickel, chromium, sodium, potassium, magnesium, and calcium is preferably 100 ppm or less, and more preferably 10 ppm or less.

When the cladding portion contains bismuth, gas generation during storage of the battery can be effectively suppressed. When the cladding portion contains bismuth, the bismuth content is such that the bismuth content in the cladding portion is preferably 100 ppm by mass or more, more preferably 300 ppm by mass or more, and even more preferably 400 ppm by mass or more. Also, the bismuth content in the cladding portion is preferably 10,000 ppm by mass or less, because this is advantageous for uniform dispersion within the cladding portion. The bismuth content in the cladding portion is more preferably 3,000 ppm by mass or less, and even more preferably 1,200 ppm by mass or less. On the other hand, from the viewpoint of further improving the shape stability of the metal foil of the present embodiment, it is preferable that the cladding portion is substantially free of bismuth. The phrase "being substantially free of bismuth" means that the bismuth content in the cladding portion is 90 ppm by mass or less.

When the cladding portion contains bismuth, the amount of deformation over time tends to increase. However, the present invention can reduce the amount of deformation over time even in such cases. Therefore, it is preferable that the cladding portion contains bismuth because the gas amount reduction effect resulting from the bismuth content can be achieved while reducing the amount of deformation over time.

On the other hand, it is preferable that the cladding portion is free of bismuth because the amount of deformation over time can be reduced even further.

The contents of zinc, the above-listed additive elements, and the above-listed unavoidable impurities in the cladding portion are measured by sampling the cladding portion from the zinc foil and subjecting the sample to ICP optical emission spectroscopy. The method for subjecting the sample to ICP optical emission spectroscopy is as described above for the core portion. The method for sampling the cladding portion is as follows. The position of the cladding portion is confirmed through observation using a scanning electron microscope, which will be described later. Then, the surface of a portion of the zinc foil where the cladding portion is exposed can be scraped off with a cutter, a file, or the like to obtain a sample.

To keep the zinc foil dense, the cladding portion preferably has an average zinc crystal grain size of 2 $\mu$m or more, more preferably 20 $\mu$m or more, and even more preferably 50 $\mu$m or less. In addition, from the viewpoint of making the advantage of reducing the amount of gas generation more marked, the average zinc crystal grain size in the cladding portion is preferably less than 100 $\mu$m, more preferably 80 $\mu$m or less, and even more preferably 50 $\mu$m or less. In order to form crystal grains of such size in the cladding portion, it is preferable to produce the cladding portion using an electrolytic method.

When the cladding portion is formed on both sides of the core portion, the above-defined average crystal-grain size of the cladding portion shall be deemed satisfied provided that the cladding portion on at least one of the two sides exhibits the required average crystal-grain size.

The average zinc crystal grain size is measured using a method described below. For the measurement, an FE gun scanning electron microscope (SUPRA 55VP available from Carl Zeiss Co., Ltd.), the microscope being equipped with an electron backscatter diffraction (hereinafter also referred to as "EBSD") evaluation apparatus (OIM Data Collection Ver. 7.2.0 available from TSL Solutions), and an attached EBSD analysis apparatus are used. A sample sectioned using an ultramicrotome is prepared, and data regarding the crystal grain size of this sample in a cross-sectional view in which the total thickness of the sample can be measured is obtained in accordance with an EBSD method. Specifically, crystal grains in the core portion are observed in a field of view defined by "the thickness of the core portion × 200 µm in a direction perpendicular to the thickness direction of the core portion" of the core portion in a cross section of the entire zinc foil (cross section taken along its thickness direction), and the average crystal grain size is then determined. Crystal grains in the cladding portion are observed in a field of view defined by "the thickness of the cladding portion × 200 µm in a direction perpendicular to the thickness direction of the cladding portion" of the cladding portion in the cross section of the entire zinc foil, and the average crystal grain size is then determined.

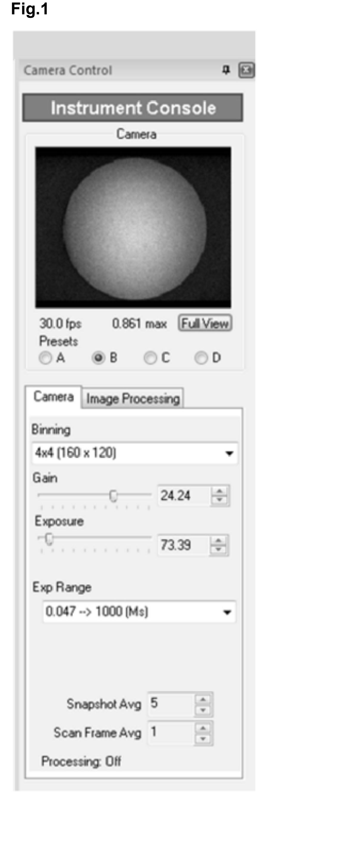

Background processing of the EBSD measurement data is performed under the condition that "Binning" is set to 4 × 4 (160 × 120), while the checkboxes for "Background Subtraction", "Normalize Intensity Histogram", and "Dynamic Background Subtraction" under the "Image Processing" tab of the EBSD evaluation apparatus are unchecked. "Gain" and "Exposure" may be changed as appropriate such that, in an image shown in the "Camera" window, as shown in Fig. 1, a Kikuchi pattern is not observed with electron diffraction, and 30±1 fps is satisfied. Under these conditions, the value of "Ave" under the "Image Processing Function" tab is set to 10, and background information is acquired by clicking "Capture Bk

The value of WD during the crystal grain size measurement is set to 15±1 mm. The checkboxes for "Background Subtraction", "Normalize Intensity Histogram", and "Dynamic Background Subtraction" under the "Image Processing" tab are checked. In this state, in an observation area, "Zn" is selected from "Phase" under "Capture Pattern" of the EBSD evaluation apparatus, and the value of WD is adjusted under the conditions that the value of "Fit" under "Solutions" is 1.5 or less and the value of "CI" is greater than 0.1.

The crystal grain size is measured by obtaining a cross-sectional image of the sample by clicking "Capture SEM" under "Scan", and then clicking "Start Scan".

From the measurement data, the crystal grain size (average) (Grain Size (Average)) is determined using "All data" in "Grain Size Quick Chart" under the analysis menu of an EBSD analysis program (OIM Analysis Ver. 7.3.1 available from TSL Solutions). The obtained crystal grain size (average) is used as the average zinc crystal grain size in the present invention.

In this measurement, boundaries with a misorientation of 15° or more are regarded as being grain boundaries. However, since zinc has a hexagonal close-packed crystal structure, taking twin boundaries into consideration, the misorientation angle of a grain boundary is expressed using a rotation axis and a rotation angle, and if the rotation axis is represented by (1) below and the rotation angle is 94.8±1° and 57±1°, or if the rotation axis is represented by (2) below and the rotation angle is 34.8±1° and 64.3±1°, this grain boundary is not regarded as being a grain boundary. The conditions of the scanning electron microscope during observation are set as follows: an acceleration voltage of 20 kV, an aperture diameter of 60 µm, High Current mode, and a sample angle of 70°. The observation magnification, the measurement area, and the step size may be changed as appropriate according to the crystal grain size.

[Math. 1]

$$(1) \quad \langle \bar{1}\,2\,\bar{1}\,0 \rangle$$

$$(2) \quad \langle \bar{1}\,1\,0\,0 \rangle$$

Note that the above is a description of a method for determining the average zinc crystal grain size. When measuring the average copper crystal grain size, in the description of the measurement method above, "Cu" can be selected, instead of "Zn", from "Phase" under "Capture Pattern" of the EBSD evaluation apparatus, in the observation area.

From the viewpoint of achieving shape stability during long-term storage, the cladding portion preferably has a thickness Wd of 5 µm or more, more preferably 20 µm or more, and even more preferably 40 µm or more. From the viewpoint of producing thin batteries, the thickness Wd of the cladding portion is preferably less than 300 µm, more preferably 250 µm or less, and even more preferably 150 µm or less. From these viewpoints, the thickness Wd of the cladding portion is preferably 5 µm or more and less than 300 µm, more preferably 20 µm or more and 250 µm or less, and even more preferably 40 µm or more and 150 µm or less.

When cladding portion(s) are present on both sides of the core portion, the thickness of the cladding portion is defined as the average of the cladding-portion thickness values measured on each side of the core portion.

When cladding portion(s) are disposed on both sides, it is preferable that the thickness of the cladding portion on each side falls within the above-described range. It should be noted that when cladding portion(s) are disposed on both sides, the thicknesses of the cladding portion(s) may be equal or different; however, from the viewpoint of suppressing warpage of the metal foil, it is preferable that the cladding portion(s) on both sides have equal thicknesses. The difference in thickness between the cladding portion(s) on both sides is preferably 50 $\mu$m or less, and more preferably 20 $\mu$m or less.

The thicknesses of the core portion and the cladding portion can be determined by observing a cross section of the metal foil taken along the thickness direction using a scanning electron microscope (SEM), detecting the interface between the core portion and the cladding portion, and then measuring the thicknesses of the core portion and the cladding portion individually.

However, during the production of a metal foil, the thickness of the core portion as a raw material can be used, and then, the thickness of the cladding portion can also be determined by subtracting the thickness of the core portion from the value of the thickness of the produced metal foil.

**When** the thickness of the core portion is Wr, and the thickness of the cladding portion is Wd, Wd/Wr is preferably 4 or less for ease of production. In particular, Wd/Wr is preferably 0.99 or less for even superior shape stability effect during long-term storage. More preferably, Wd/Wr is 0.8 or less, and particularly preferably 0.7 or less. From the viewpoint of ensuring the formation of a uniform cladding portion, Wd/Wr is preferably 0.1 or more, more preferably 0.2 or more, and even more preferably 0.3 or more. Based on these points, Wd/Wr is preferably 0.1 or more and 4.0 or less, more preferably 0.1 or more and 0.99 or less, even more preferably 0.2 or more and 0.8 or less, and yet even more preferably 0.3 or more and 0.7 or less.

The metal foil of the present invention exhibits a peak derived from the (002) plane of zinc, observed when each side of the metal foil is individually subjected to X-ray diffraction measurement. More specifically, both sides of the metal foil exhibit an $S_{(002)}/S_{(101)}$ ratio of 1.01 or more when each side of the metal foil is individually subjected to X-ray diffraction measurement. By having the core portion made of a metal material and having similar zinc orientations on both sides of the core portion as described above, the metal foil of the present invention has good shape stability after long-term storage. In addition, the configuration in which both sides of the metal foil exhibit an $S_{(002)}/S_{(101)}$ ratio of 1.01 or more is also preferable for preventing the formation of dendrites.

Furthermore, to facilitate the measurement of $S_{(002)}/S_{(101)}$, it is preferable to configure the metal foil with outermost layer surfaces on both sides containing zinc as a base material.

The metal foil more preferably exhibits an $S_{(002)}/S_{(101)}$ ratio of 1.01 or more, and even more preferably 1.10 or more, when each side of the metal foil is individually subjected to X-ray diffraction measurement. The value of $S_{(002)}/S_{(101)}$ in the metal foil can be infinitely large (especially when the intensity $S_{(101)}$ is small), and therefore, the upper limit of this value is not limited. As used herein, the term "peak intensity ratio" refers to the peak height ratio.

The (002) plane of zinc is derived from a hexagonal crystal. A metal foil with both sides exhibiting an $S_{(002)}/S_{(101)}$ ratio greater than or equal to the aforementioned lower limit can be obtained by forming an electrolytic layer containing zinc as a base material on a substrate made of a metal material using an electrolytic zinc plating method, while adopting a suitable production method, which will be described later.

The metal foil of the present invention may or may not exhibit a peak derived from the (101) plane of zinc, observed when each side of the metal foil is individually subjected to X-ray diffraction measurement. The (101) plane of zinc is derived from a hexagonal crystal.

The peak derived from the (002) plane of zinc on each side of the metal foil is usually observed within the range of $2\theta = 36.30 \pm 0.3°$. The peak derived from the (101) plane of zinc on each side of the metal foil is usually observed within the range of $2\theta = 43.24 \pm 0.3°$. Here, Cu-K$\alpha$ radiation is used as an X-ray source in the X-ray diffraction measurement.

In the X-ray diffraction measurement using Cu-K$\alpha$ radiation as the X-ray source, it is preferable that, on each side of the metal foil, the peak derived from the (002) plane of zinc is the peak of maximum intensity observed within the range of $2\theta = 15°$ to $120°$.

In the X-ray diffraction measurement using Cu-K$\alpha$ radiation as the X-ray source, a peak (hereinafter also referred to as "another peak") other than the peak derived from the (002) plane of zinc and the peak derived from the (101) plane of zinc may be observed within the range of $2\theta = 15°$ to $120°$ on each side of the metal foil; however, it is preferable that no other peak is observed because this indicates that a uniform crystal arrangement is achieved. When another peak is observed, the intensity of that peak is such that the ratio of this peak intensity to the peak intensity of the peak derived from the (002) plane of zinc is preferably 0.99 or less, and more preferably 0.9 or less.

The metal foil of the present invention has excellent shape stability after long-term storage. Specifically, when the metal foil is cut to dimensions of 190 mm in a longitudinal direction and 90 mm in a lateral direction, enclosed with argon in a hermetically sealable container, and stored under conditions at a temperature of 80°C and a relative humidity of 50% for 96 hours, the amount of deformation in the longitudinal direction that is obtained by subtracting the dimension before storage from the dimension after storage is 0.5 mm or less, more preferably 0.3 mm or less, and even more preferably 0.1 mm or less.

Moreover, when the metal foil is stored under the aforementioned conditions, the amount of deformation in the lateral direction that is obtained by subtracting the dimension before storage from the dimension after storage is preferably 0.5 mm or less, more preferably 0.3 mm or less, and even more preferably 0.1 mm or less. Furthermore, the warpage, which is the amount of deformation in a height direction, of the metal foil is preferably 5 mm or less, more preferably 4 mm or less, and even more preferably 3 mm or less.

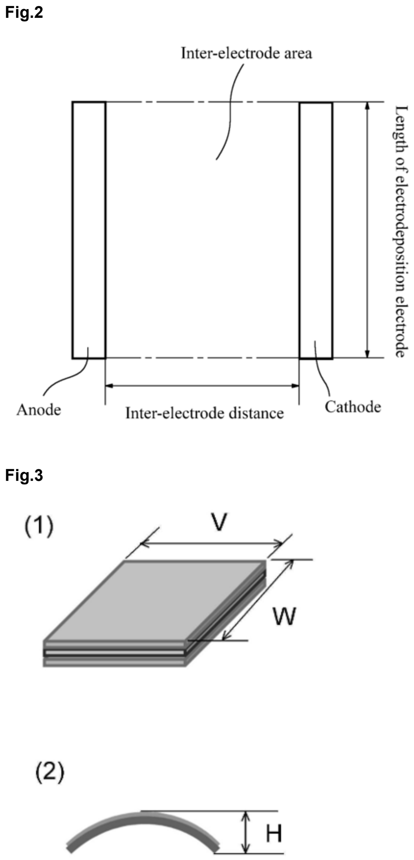

It should be noted that, as shown in Fig. 3(1), for example, the longitudinal direction and the lateral direction are directions that are parallel to the plane of the metal foil and perpendicular to each other. The longitudinal dimension after storage is the maximum length in the longitudinal direction W of a sample shown in Fig. 3(1) (this refers to the length of a portion that is stretched the most in the longitudinal direction W during storage, if the dimension in the longitudinal direction W of the sample before storage is uniform along the lateral direction V). The lateral dimension after storage is also the maximum length in the lateral direction V (this refers to the length of a portion that is stretched the most in the lateral direction V during storage, if the dimension in the lateral direction V of the sample before storage is uniform along the longitudinal direction W).

Furthermore, as shown in Fig. 3(2), the warpage is the amount of deformation in the height H of the sample when allowed to stand on a flat surface. It should be noted that this amount of deformation refers to the difference between the height at the highest point from the flat surface and the height before storage.

The above-described various parameters for the metal foil can be achieved by, as will be described in Examples later, forming both sides of the metal foil of the present invention with electrolytic layers containing zinc as a base material using an electrolytic plating method, while adopting a suitable production method, which will be described later. In particular, the above-described various parameters can be achieved by choosing suitable thicknesses of the core portion and the cladding portion and adjusting the electrolyte concentration, current density, and immersion time in the electrolyte solution, in the suitable production method.

It is preferable that the core portion is inseparably bonded to the cladding portion. The core portion being inseparably bonded to the cladding portion means that when a cross section of the metal foil taken along the thickness direction is observed using a scanning electron microscope, at least one crystal grain having a shape that straddles the interface between the core portion and the cladding portion is observed. This shape forms as a result of a crystal grain in the cladding portion growing in such a manner as to align the orientation plane of a crystal grain in the core portion. More specifically, in a cross section of the metal foil of the present embodiment taken along the thickness direction, a row of pore portions constituted by a plurality of small pore portions is observed, and the position of the interface can be identified by this row of pore portions. When the scanning electron microscope image is a backscattered electron image, individual zinc crystal grains in the microscope image have different shades of color, reflecting the different orientation planes of the crystal grains. The shapes of the zinc crystal grains can be identified based on the differences between the shades. If at least one crystal grain having a continuous shape that extends across the interface between the core portion and the cladding portion is observed, the core portion and the cladding portion can be judged as being inseparably bonded to each other, and it is preferred that two or more such crystal grains are observed. It should be noted that the interface between the core portion and the cladding portion can also be confirmed by checking the locations of the metal element serving as the base material and an additive element through EDS analysis (energy-dispersive spectroscopy).

In order to bond the core portion and the cladding portion inseparably, the metal foil can be produced using a suitable production method, which will be described later.

From the viewpoint of reducing passivation and the like in a battery such as a secondary battery, the metal foil may be free of aluminum. For example, the aluminum content in the metal foil may be preferably 1% or less, 0.1% or less, or 0.05% or less, with respect to the mass of the metal foil.

From the viewpoint of reducing environmental burden, it is desirable that the metal foil is free of lead. The lead content is preferably 200 ppm or less, **more preferably** 100 ppm or less, and even more preferably 50 ppm or less, with respect to the mass of the metal foil. In addition, the metal foil may be free of cadmium or may contain cadmium as unavoidable impurities. It is desirable that the cadmium content in the metal foil is as low as possible. In particular, the cadmium content is desirably 10 ppm by mass or less.

The aluminum content, the lead content, and the cadmium content in the metal foil are measured through ICP optical emission spectroscopy. For measurement through ICP optical emission spectroscopy, a similar method to that described above can be used.

The metal foil of the present invention is a thin metal foil with a thickness of preferably 15 $\mu$m or more and 900 $\mu$m or less, more preferably 25 $\mu$m or more and 500 $\mu$m or less, and even more preferably 30 $\mu$m or more and 300 $\mu$m or less. The thickness of the metal foil is measured using the above-described method. Such a thin metal foil is suitable as a negative electrode material for a secondary battery, and particularly for a stacked secondary battery such as a bipolar battery. In particular, the metal foil of the present invention has excellent shape stability during long-term storage and is therefore suitable for a secondary battery, and particularly for a stacked secondary battery.

Next, a suitable method for producing a zinc foil of the present invention will be described.

This production method includes a step of immersing a substrate serving as a cathode in an electrolyte solution containing zinc ions at 10°C to 90°C for 1 to 10 minutes, the substrate having a first side made of a metal material and a second side located opposite to the first side, and after the immersion step, a step of forming an electrolytic layer containing zinc as a base material on at least one side of the substrate by performing electrolytic plating using the electrolyte solution containing zinc ions.

However, if at least one side of the substrate exhibits an $S_{(002)}/S_{(101)}$ ratio of less than 1.01 when subjected to X-ray diffraction measurement, an electrolytic layer containing zinc as a base material is formed at least on that side using an electrolytic plating method.

The foregoing description of the core portion can be applied to the **description** of the substrate.

As the electrolyte solution containing zinc ions, an aqueous zinc sulfate solution, an aqueous zinc nitrate solution, an aqueous zinc chloride solution, or the like may be used. The zinc concentration in the electrolyte solution is preferably 30 g/L or more and 100 g/L or less, and more preferably 35 g/L or more and 90 g/L or less.

When the cladding portion is to contain bismuth, the electrolyte solution may also contain bismuth ions in addition to zinc ions. As the bismuth ion source, bismuth nitrate or the like may be used. When using bismuth ions contained in the electrolyte solution, the bismuth ion concentration in the electrolyte solution is set such that the ratio of the mass of bismuth to the total mass of zinc and bismuth in the electrolyte solution is preferably 10 ppm or more and 10,000 ppm or less for gas generation suppression, more preferably 15 ppm or more and 8,000 ppm or less, even more preferably 20 ppm or more and 7,000 ppm or less, and yet even more preferably 30 ppm or more and 6,500 ppm or less. When the electrolyte solution does not contain bismuth, the ratio of the mass of bismuth to the mass of zinc in the electrolyte solution is preferably less than 10 ppm, more preferably 6 ppm or less, and even more preferably 3 ppm or less.

The electrolyte solution may further contain an additional compound. As the additional compound, for example, sulfuric acid may be added for the purpose of adjusting the pH of the electrolyte solution. The pH of the electrolyte solution may be 2 or less at the time of electrolysis.

In the present production method, prior to electrolytic plating using the electrolyte solution, the substrate, which serves as the cathode, is immersed in the electrolyte solution at 10°C to 90°C for 1 to 10 minutes. This facilitates obtaining a metal foil in which a deposition surface deposited through the subsequent electrolytic plating has an $S_{(002)}/S_{(101)}$ ratio of 1.01 or more. From this viewpoint, the temperature of the electrolyte solution is more preferably 10°C to 80°C, and even more preferably 15°C to 35°C. The immersion time before electrolytic plating is more preferably 3 to 8 minutes. The inventors of the present invention considers that this preliminary immersion has the effect of leveling the surface of the electrode (core portion), which facilitates obtaining a metal foil in which the aforementioned deposition surface exhibits an $S_{(002)}/S_{(101)}$ ratio of 1.01 or more.

In the electrolytic method, an anode and a cathode are immersed in an electrolyte solution containing a zinc source, and an electrolytic layer containing zinc as a base material is deposited on the surface of the cathode, which is the substrate. This makes it possible to easily obtain a cladding portion with a small average crystal grain size, and is therefore preferable. As the anode used in electrolysis, a known dimensionally-stable electrode (DSE) is preferably used. As the DSE, for example, a titanium electrode coated with iridium oxide, a titanium electrode coated with ruthenium oxide, or the like is preferably used.

From the viewpoint of successfully obtaining a metal foil with good shape stability, it is advantageous to circulate the electrolyte solution during electrolysis. In order to circulate the electrolyte solution, for example, an electrolysis apparatus that includes a closed flow path, an electrolytic bath provided in the flow path, and a pump provided in the flow path can be used, and the electrolyte solution can be made to unidirectionally flow through the electrolytic bath by driving the pump. The anode and the cathode used in electrolysis can be immersed in the electrolytic bath, with the anode and the cathode being opposed to each other. The anode and the cathode are preferably disposed in the electrolytic bath such that the opposing surfaces of the anode and the cathode (such as the electrodeposition surface of the cathode) are parallel to the flow direction of the electrolyte solution.

When electrolysis is performed while circulating the electrolyte solution, it is advantageous to adjust the flow rate of the electrolyte solution, or in other words, the circulation rate of the electrolyte solution, because this makes it possible to successfully obtain a zinc foil that achieves the desired effects. More specifically, the circulation rate of the electrolyte solution is preferably set to 0.001 L/(min·mm$^2$) or more and 1 L/(min·mm$^2$) or less, more preferably 0.002 L/(min·mm$^2$) or more and 0.6 L/(min·mm$^2$) or less, even more preferably 0.003 L/(min·mm$^2$) or more and 0.4 L/(min·mm$^2$) or less, and yet even more preferably 0.005 L/(min·mm$^2$) or more and 0.04 L/(min·mm$^2$) or less. The circulation rate is calculated by dividing the flow rate (L/min) of the electrolyte solution by the inter-electrode area (mm$^2$). As shown in Fig. 2, the inter-electrode area is expressed as the product of the inter-electrode distance (mm) and the width (mm) of the electrodeposition electrode. In Fig. 2, the electrolyte solution is preferably made to flow in a direction perpendicular to the paper plane. Also, in Fig. 2, the plate-like electrodes extend in the direction perpendicular to the paper plane.

The current density during electrolysis is one of the factors that affect the zinc crystal grain size in the zinc foil to be obtained. More specifically, by setting the current density to a value higher than that used in ordinary zinc electrolysis conditions, it is possible to generate a large number of fine crystals, thereby easily obtaining a zinc foil with a small average crystal grain size. In view of this, the current density is preferably set to 1,000 A/m$^2$ or more and 10,000 A/m$^2$ or less, more

preferably 1,000 $A/m^2$ or more and 6,000 $A/m^2$ or less, and even more preferably 1,000 $A/m^2$ or more and 4,000 $A/m^2$ or less.

The electrolyte solution can be used for electrolysis in either a non-heated state or a heated state. In the case where electrolysis is performed with the electrolyte solution being heated, the temperature of the electrolyte solution is preferably set to 10°C or more and 90°C or less. The temperature of the electrolyte solution is more preferably 20°C or more and 90°C or less, even more preferably 30°C or more and 80°C or less, and yet even more preferably 30°C or more and 70°C or less. Electrolysis is performed until the thickness of the zinc foil reaches an intended value.

It is preferable that the above-described electrolytic plating is performed only once. For example, when forming electrolytic layers containing zinc as a base material on both sides of the substrate as cladding portion(s) through electrolytic plating, it is preferable to form the electrolytic layers containing zinc as the base material on both sides of the substrate simultaneously by performing electrolytic plating while both sides are in contact with the electrolytic solution.

The thus obtained metal foil of the present invention is suitably used as the material of a negative electrode active material for a secondary battery. Examples of the secondary battery include a nickel-zinc battery, an air-zinc battery, and a manganese-zinc battery. Furthermore, since the metal foil itself is conductive, the metal foil also functions as a current collector. Thus, it is also possible to use the metal foil itself as a negative electrode without the need to use a current collector. It should be noted that the metal foil can also be used as the material of a negative electrode active material for a primary battery.

As indicated by evaluation results in Examples below, a battery including the metal foil of the present invention can be used as an electrode material having good shape stability even when stored at a high temperature for a long time, and therefore can be suitably used in a secondary battery.

The present invention was achieved based on the above-described findings, and provides <1> to <8> below.

<1> A metal foil comprising:

   a core portion that has a first side and a second side located opposite to the first side and is made of a metal material; and
   at least one cladding portion that is located on at least one of the first side and the second side of the core portion and contains zinc as a base material,

wherein, when a first side and a second side of the metal foil is individually subjected to X-ray diffraction measurement, an intensity ratio of a peak intensity $S_{(002)}$ of a peak derived from the (002) plane of zinc to a peak intensity $S_{(101)}$ of a peak derived from the (101) plane of zinc is 1.01 or more on the first side and the second side of the metal foil.

<2> The metal foil as set forth in clause <1>, wherein, when the metal foil is cut to dimensions of 190 mm in a longitudinal direction and 90 mm in a lateral direction, enclosed with argon in a sealable container, and stored under conditions at a temperature of 80°C and a relative humidity of 50% for 96 hours, changes in dimensions after the storage are 0.5 mm or less in the longitudinal direction, 0.5 mm or less in the lateral direction, and a warpage of 5 mm or less.

<3> The metal foil as set forth in clause <1> or <2>, wherein the cladding portion is integrally or respectively formed on both of the first side and the second side of the core portion.

<4> The metal foil as set forth in any one of clauses <1> to <3>, wherein the core portion and the cladding portion are inseparably bonded to each other.

<5> The metal foil as set forth in any one of clauses <1> to <4>, wherein the core portion is a copper foil or a zinc foil.

<6> The metal foil as set forth in any one of clauses <1> to <5>, wherein the core portion is an electrolytic copper foil, a rolled zinc foil, an electrolytic zinc foil, or a rolled zinc foil.

<7> The metal foil as set forth in any one of clauses <1> to <5>, wherein the core portion has a thickness of 5 $\mu$m or more and 300 $\mu$m or less.

<8> The metal foil as set forth in any one of clauses <1> to <6>, wherein the cladding portion has a thickness of 5 $\mu$m or more and 300 $\mu$m or less.

<9> The metal foil as set forth in any one of clauses <1> to <8>,

   wherein the core portion contains copper as a base material or is a rolled zinc foil, and
   wherein the cladding portion is integrally or respectively formed on both of the first side and the second side of the core portion, or
   the core portion is an electrolytic zinc foil, and the core portion has the cladding portion on at least an electrode surface thereof.

<10> The metal foil as set forth in any one of clauses <1> to <9>, wherein the cladding portion is substantially free of bismuth.

<11> An electrode material for a secondary battery, the electrode material comprising the metal foil as set forth in clause <1> or <2>.

**Examples**

Hereinafter, the present invention will be described in further detail based on examples. However, the scope of the present invention is not limited to the examples given below. Unless otherwise specified, "%" means "mass%".

**Example 1**

(1) Preparation of Substrate

An electrolytic copper foil (purity: 99.9%, available from Mitsui Mining & Smelting Co., Ltd.) having the thickness shown in Table 1 was prepared as a substrate.

(2) Preparation of Electrolyte Solution

Zinc oxide was used as a zinc compound. The zinc compound was dissolved in water together with sulfuric acid to prepare an electrolyte solution. The zinc concentration in the electrolyte solution was set to 50 g/L. The sulfuric acid concentration was set to 200 g/L, as a value obtained by converting the total amount of sulphate ions as $H_2SO_4$. Bismuth nitrate was added to the electrolyte solution. The bismuth nitrate concentration was adjusted such that the ratio of bismuth relative to the total mass of zinc and bismuth was 700 ppm by mass. The above-described electrolytic copper foil was used as a cathode. The cathode was immersed in the electrolyte solution at 20°C for 5 minutes.

(3) Reduction and Deposition of Zinc

A DSE composed of a titanium electrode coated with iridium oxide was used as an anode.
In a state in which the electrolyte solution was heated to 30°C, an electric current was applied between the anode and the cathode. The current density was set to 2,000 A/m². The electrolyte solution was circulated with the circulation rate being set to 0.021 L/(min•mm²). Both sides of the electrolytic copper foil were immersed in the electrolyte solution, and electrolysis was performed to form electrolytic zinc layers with electrolytic thicknesses being the values shown in Table 1, on both sides of the electrolytic copper foil. Thus, a copper-zinc composite foil in which the electrolytic zinc layers and the electrolytic copper foil were combined into one piece was obtained. In this composite foil, the electrolytic copper foil corresponds to a core portion, and the electrolytic zinc layers correspond to cladding portion(s). The obtained composite foil was washed with ion-exchanged water and dried using hot air.

**Example 2**

Bismuth nitrate in steps (2) and (3) of Example 1 was not used. Otherwise, a similar procedure to that of Example 1 was performed. Thus, a copper-zinc composite foil was obtained.

**Example 3**

The substrate prepared in step (1) of Example 1 was changed from the electrolytic copper foil to a rolled zinc foil with the thickness shown in Table 1 (purity: 99.99%, available from Mitsui Sumitomo Metal Mining Brass & Copper Co., Ltd.). Otherwise, a similar procedure to that of Example 1 was performed. Thus, a zinc foil, which was a composite foil in which the rolled zinc foil and the electrolytic zinc layers were combined into one piece, was obtained.

**Example 4**

(1) Production of Electrolytic Zinc Foil as Substrate

Zinc oxide was used as a zinc compound. The zinc compound was dissolved in water together with sulfuric acid to prepare an electrolyte solution. The zinc concentration in the electrolyte solution was set to 50 g/L. The sulfuric acid concentration was set to 200 g/L, as a value obtained by converting the total amount of sulphate ions as $H_2SO_4$. An aluminum plate was used as a cathode. The cathode was immersed in the electrolyte solution at 30°C for 5 minutes.
A DSE composed of a titanium electrode coated with iridium oxide was used as an anode.
In a state in which the electrolyte solution was heated to 30°C, an electric current was applied between the anode and the cathode. The current density was set to 2,000 A/m$^2$. The electrolyte solution was circulated with the circulation rate being set to 0.021 L/(min•mm$^2$).

Electrolysis was performed in this state to form an electrolytic zinc layer on one side of the aluminum plate. Upon completion of electrolysis, the electrolytic zinc layer was removed from the aluminum plate serving as the cathode. Thus, a zinc foil was obtained. The obtained zinc foil was washed with ion-exchanged water and dried using hot air.

(2) Production of Cladding Portion

(2-1) Zinc oxide was used as a zinc compound. The zinc compound was dissolved in water together with sulfuric acid to prepare an electrolyte solution. The zinc concentration in the electrolyte solution was set to 50 g/L. The sulfuric acid concentration was set to 200 g/L, as a value obtained by converting the total amount of sulphate ions as H$_2$SO$_4$.

(2-2) The electrolytic zinc foil obtained in step (1) above was used as the cathode of Example 2, with its deposition surface masked. Also, the electrolyte solution obtained in step (2-1) above was used as the electrolyte solution of Example 2. An unmasked electrode surface (surface located on the aluminum plate side in step (1) above) of the electrolytic zinc foil was immersed in the electrolyte solution to perform the immersion step and electrolytic plating. Otherwise, a similar procedure to that of Example 2 was performed to thereby form an electrolytic zinc layer with an electrolytic thickness being the value shown in Table 1, on the electrode surface of the electrolytic zinc foil. Thus, a zinc foil, which was a composite foil in which the electrolytic zinc layer and the electrolytic zinc foil were combined into one piece, was obtained.

**Comparative Example 1**

In this example, an electrolytic zinc foil similar to that described in Examples of Patent Document 1 was produced. Zinc oxide was used as a zinc compound. The zinc compound was dissolved in water together with sulfuric acid to prepare an electrolyte solution. The zinc concentration in the electrolyte solution was set to 50 g/L. The sulfuric acid concentration was set to 200 g/L, as a value obtained by converting the total amount of sulphate ions as H$_2$SO$_4$. Bismuth nitrate was added to the electrolyte solution. The bismuth nitrate concentration was adjusted such that the ratio of bismuth relative to the total mass of zinc and bismuth was 700 ppm by mass. An aluminum plate was used as a cathode. The cathode was immersed in the electrolyte solution at 30°C for 5 minutes.

A DSE composed of a titanium electrode coated with iridium oxide was used as an anode.

In a state in which the electrolyte solution was heated to 30°C, an electric current was applied between the anode and the cathode. The current density was set to 2,000 A/m$^2$. The electrolyte solution was circulated with the circulation rate being set to 0.021 L/(min•mm$^2$).

Electrolysis was performed in this state to form an electrolytic zinc layer on one side of the aluminum plate. Upon completion of electrolysis, the electrolytic zinc layer was removed from the aluminum plate serving as the cathode. Thus, a zinc foil was obtained. The obtained zinc foil was washed with ion-exchanged water and dried using hot air.

**Comparative Example 2**

A similar procedure to that of Example 1 was performed, except that one side of the electrolytic copper foil used as the cathode in steps (2) and (3) of Example 1 was masked, and an electrolytic zinc layer was deposited only on one side. Thus, a copper-zinc composite foil in which the electrolytic zinc layer formed on one side of the electrolytic copper foil and the electrolytic copper foil were combined into one piece was obtained.

**Comparative Example 3**

A similar procedure to that of Example 3 was performed, except that one side of the rolled zinc foil used as the cathode in steps (2) and (3) of Example 3 was masked, and an electrolytic zinc layer was deposited only on one side. Thus, a zinc foil, which was a composite foil in which the electrolytic zinc layer formed on one side of the rolled zinc foil and the rolled zinc foil were combined into one piece, was obtained.

The following measurements and evaluations were performed on the metal foils obtained in the examples and the comparative examples. Table 1 shows the results.

Table 1 also shows the amounts of bismuth in the cladding portion(s) of these metal foils. The bismuth contents in the cladding portion(s) are values determined by performing measurements using ICP optical emission spectroscopy on the metal foils obtained in the examples and the comparative examples. Specifically, the following procedure was used.

For Example 1 and Comparative Example 2, the metal foil was dissolved in an aqueous solution of nitric acid. Then, the Bi mass and Zn mass in the solution were determined, and "Bi mass / (Zn mass + Bi mass)" was calculated.

For Example 3 and Comparative Example 3, the metal foil was dissolved in an aqueous solution of nitric acid, and the Bi content in the solution was measured. Furthermore, the mass of zinc in the electrolyte solution after electrolytic plating during the formation of the cladding portion(s) was measured using ICP optical emission spectroscopy. A value obtained by subtracting the measured mass from the mass of zinc in the electrolyte solution before electrolytic plating was used as the mass of zinc in the cladding portion(s). Based on these values, "Bi mass / (Zn mass in cladding portion(s) + Bi mass)" was calculated.

For the metal foil of Comparative Example 1, the metal foil was dissolved in an aqueous solution of nitric acid. Then, the Bi mass and Zn mass in the solution were determined, and "Bi mass / (Zn mass + Bi mass)" was calculated. However, since the metal foil of Comparative Example 1 consists only of the core portion without any cladding portion, the amount of bismuth in the core portion is shown in Table 1.

<XRD Measurement Conditions>

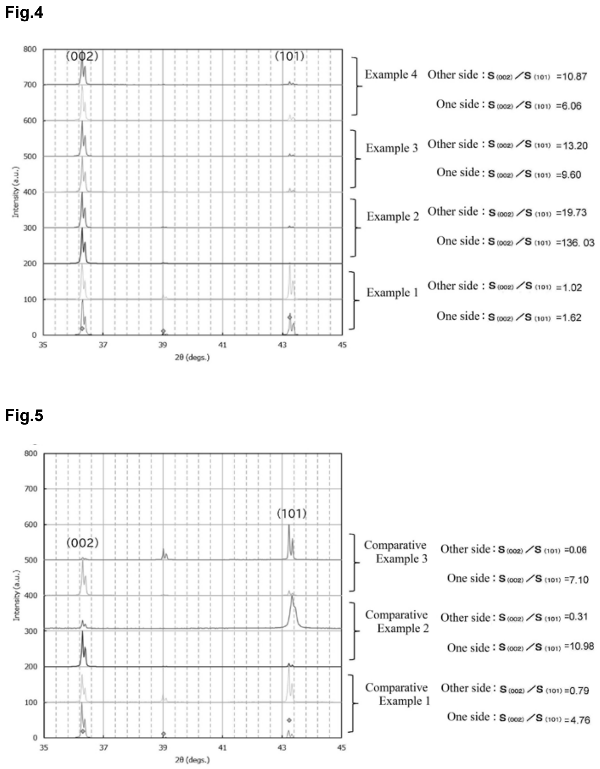

An X-ray diffraction apparatus (D8 ADVANCE, available from Bruker) was used. The measurement conditions were as follows. The results of XRD measurements performed on both sides of the metal foils obtained in Examples 1 to 4 are shown in Table 1 and Fig. 4, and the results of XRD measurements performed on both sides of the metal foils obtained in Comparative Examples 1 to 3 are shown in Table 1 and Fig. 5. The target surfaces of the XRD measurements performed on the metal foils are as shown in Table 1. (In the cases where the core portion was an electrolytic foil, "electrolytic surface" or "deposition surface" is shown, and in the cases where the core portion was a rolled foil, "rolled surface" is shown. Also, the presence or absence of a cladding portion is shown.)

- X-ray source: Cu-K$\alpha$ radiation
- Tube voltage: 40 kV
- Tube current: 40 mA
- Scan speed: 10.5 deg/min
- Step: 0.015 deg
- Scan range: $2\theta$ = 15 degrees to 120 degrees

<Evaluation (Amount of Deformation after Passage of Time)>

Each of the metal foils obtained in the examples and the comparative examples was cut to dimensions of 190 mm in the longitudinal direction and 90 mm in the lateral direction. Then, the cut metal foil was placed on a flat surface, and its dimensions (longitudinal length, lateral length, and height) were measured. After that, the metal foil was placed in a sealed container with the gas inside purged with argon gas, then hermetically sealed, and stored under the conditions at a temperature of 80°C and a relative humidity of 50% for 96 hours. Then, the dimensions were measured again. The dimensions were measured with a metal straightedge. The amounts of deformation (mm) were determined by subtracting the initial dimensions from the respective dimensions after passage of time. Table 1 shows the results.

[Table 1]

| | Configuration | | | | | | S_(002)/S_(101) on both sides | | | | | | Evaluation | | |
| | Electrolysis on substrate | Core portion (substrate) | | Cladding portion | | Bi in cladding portion (ppm by mass) | One side | | | Other side | | | Amount of deformation after passage of time (mm) | | |
| | | Type | Thickness Wr (μm) | Thickness Wd (μm) | | | Surface of core portion | Presence or absence of cladding portion | $S_{(002)}/S_{(101)}$ | Surface of core portion | Presence or absence of cladding portion | $S_{(002)}/S_{(101)}$ | Longitudinal direction (W) Long side | Lateral direction (V) Short side | Warpage |
|---|---|---|---|---|---|---|---|---|---|---|---|---|---|---|---|
| Ex. 1 | Both sides | Electrolytic copper foil | 15 | 56 | 56 | 548 | Deposition surface | Present | 1.62 | Electrode surface | Present | 1.02 | 0 | 0 | 3.3 |
| Ex. 2 | Both sides | Electrolytic copper foil | 15 | 54 | 54 | - | Deposition surface | Present | 136.03 | Electrode surface | Present | 19.73 | 0 | 0 | 2.1 |
| Ex. 3 | Both sides | Rolled zinc foil | 50 | 27 | 27 | 771 | Rolled surface | Present | 9.60 | Rolled surface | Present | 13.20 | 0 | 0 | 2.5 |
| Ex. 4 | One side | Electrolytic zinc foil | 50 | 51 | - | - | Electrode surface | Present | 6.06 | Deposition surface | Absent | 10.87 | 0 | 0 | 2.2 |
| Com. Ex. 1 | - | Electrolytic zinc foil | 50 | - | - | 680 | Deposition surface | Absent | 4.76 | Electrode surface | Absent | 0.79 | 4 | 2.5 | 11.3 |
| Com. Ex. 2 | One side | Electrolytic copper foil | 15 | 51 | - | 495 | Deposition surface | Present | 10.98 | Electrode surface | Absent | 0.31 | 0 | 0 | 6.4 |
| Com. Ex. 3 | One side | Rolled zinc foil | 50 | 53 | - | 549 | Rolled surface | Present | 7.10 | Rolled surface | Absent | 0.06 | 0 | 0 | 8.3 |

As shown in Table 1, the amounts of deformation after passage of time were suppressed in the examples. In contrast, the dimensional elongation over time was large in Comparative Example 1, where $S_{(002)}/S_{(101)}$ of the electrode surface of the electrolytic zinc foil was less than 1.01. In addition, the metal foils of Comparative Examples 2 and 3, where $S_{(002)}/S_{(101)}$ of the surface without an electrolytic layer was less than 1.01, showed significant warpage after long-term storage.

**Industrial Applicability**

According to the present invention, a zinc-containing metal foil with excellent shape stability during long-term storage is provided.

**Claims**

1. A metal foil comprising:

   a core portion that has a first side and a second side located opposite to the first side and is made of a metal material; and
   at least one cladding portion that is located on at least one of the first side and the second side of the core portion and contains zinc as a base material,
   wherein, when a first side and a second side of the metal foil is individually subjected to X-ray diffraction measurement, an intensity ratio of a peak intensity $S_{(002)}$ of a peak derived from the (002) plane of zinc to a peak intensity $S_{(101)}$ of a peak derived from the (101) plane of zinc is 1.01 or more on the first side and the second side of the metal foil.

2. The metal foil according to claim 1, wherein, when the metal foil is cut to dimensions of 190 mm in a longitudinal direction and 90 mm in a lateral direction and stored under conditions at a temperature of 80°C and a relative humidity of 50% for 96 hours, changes in dimensions after the storage are 0.5 mm or less in the longitudinal direction, 0.5 mm or less in the lateral direction, and a warpage of 5 mm or less.

3. The metal foil according to claim 1 or 2, wherein the cladding portion is integrally or respectively formed on both of the first side and the second side of the core portion.

4. The metal foil according to claim 1 or 2, wherein the core portion and the cladding portion are inseparably bonded to each other.

5. The metal foil according to claim 1 or 2, wherein the core portion is a copper foil or a zinc foil.

6. The metal foil according to claim 1 or 2, wherein the core portion has a thickness of 5 $\mu$m or more and 300 $\mu$m or less.

7. The metal foil according to claim 1 or 2, wherein the cladding portion has a thickness of 5 $\mu$m or more and 300 $\mu$m or less.

8. An electrode material for a secondary battery, the electrode material comprising the metal foil according to claim 1 or 2.

**Fig.1**

**Fig.2**

**Fig.3**

**Fig.4**

**Fig.5**

## INTERNATIONAL SEARCH REPORT

| International application No. |
| --- |
| **PCT/JP2024/017609** |

### A. CLASSIFICATION OF SUBJECT MATTER

*H01M 4/02*(2006.01)i; *C22C 18/00*(2006.01)i; *C25D 1/00*(2006.01)i; *C25D 1/04*(2006.01)i; *C25D 7/06*(2006.01)i; *H01M 4/66*(2006.01)i

FI:  H01M4/02 Z; C25D1/04 311; C25D1/00 311; C25D7/06 A; C25D7/06; H01M4/66 A; C22C18/00

According to International Patent Classification (IPC) or to both national classification and IPC

### B. FIELDS SEARCHED

Minimum documentation searched (classification system followed by classification symbols)

H01M4/02; C22C18/00; C25D1/00; C25D1/04; C25D7/06; H01M4/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-183575 A (NAN YA PLASTIC CORP.) 12 November 2020 (2020-11-12) | 1-8 |
| A | JP 2001-32093 A (NIPPON STEEL CORPORATION) 06 February 2001 (2001-02-06) | 1-8 |
| A | JP 10-18079 A (KABUSHIKI KAISHA KOBE SEIKO SHO) 20 January 1998 (1998-01-20) | 1-8 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 July 2024** | **30 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017609**

| Patent document cited in search report | | | Publication date (day/month/year) | Patent family member(s) | | | Publication date (day/month/year) |
|---|---|---|---|---|---|---|---|
| JP | 2020-183575 | A | 12 November 2020 | US | 2020/0350620 | A1 | |
| | | | | KR | 10-2020-0127120 | A | |
| | | | | CN | 111864177 | A | |
| JP | 2001-32093 | A | 06 February 2001 | (Family: none) | | | |
| JP | 10-18079 | A | 20 January 1998 | CN | 11735515 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220037654 A1